# EUROPÄISCHE PATENTANMELDUNG

(11) **EP 1 712 203 A1**
(43) Veröffentlichungstag der Anmeldung: **18.10.2006**
(21) Anmeldenummer: 06006205.6
(22) Anmeldetag: 25.03.2006
(51) Int. Cl.: A61C 7/36

(54) **Kieferorthopädische Vorrichtung insbesondere zum Vorverlagern des Unterkiefers eines Patienten**

(30) Priorität: 11.04.2005 DE 102005016736
(71) Anmelder: Bredent Dentalgeräte und Materialien Fach- und Organisationsberatung Peter Brehm, 89250 Senden (DE)
(72) Erfinder: Sander, Christian, Dr., D 89081 Ulm (DE)
(74) Vertreter: Hentrich, Swen

(57) **Zusammenfassung**

Die kieferorthopädische Vorrichtung dient insbesondere zum Vorverlagern des Unterkiefers (1) eines Patienten mittels eines paarweise eingesetzten Verbindungsgliedes (2). Das Verbindungsglied (2) ist einerseits am Oberkiefer (3) und andererseits am Unterkiefer (1) jeweils mittels eines Gelenkes (4,5) angeschlossen und von einem Teleskoprohr (6) sowie einer im Teleskoprohr (6) längsverschiebbar geführten Gleitstange (7) gebildet. Das eine Gelenk (4) ist als Doppelkugelgelenk ausgebildet, wobei beide Kugelgelenke (9,10) an einer Verbindungshülse (8) angeordnet sind.

## Beschreibung

Die Erfindung betrifft eine kieferorthopädische Vorrichtung insbesondere zum Vorverlagern des Unterkiefers eines Patienten mittels eines paarweise eingesetzten Verbindungsgliedes, welches einerseits am Oberkiefer und andererseits am Unterkiefer jeweils mittels eines Gelenkes angeschlossen und von einem Teleskoprohr sowie einer im Teleskoprohr längsverschiebbar geführten Gleitstange gebildet ist.

Derartige kieferorthopädische Vorrichtungen sind aus der Praxis bekannt und werden zur Behandlung unterschiedlicher Aufgaben in der Kieferorthopädie eingesetzt. Hierzu gehört unter anderem die Steigerung des Unterkieferwachstums, die Hemmung des Oberkieferwachstums, die Mesialisation der Unterkieferdentition sowie die Distalisation der Oberkiefermolaren.

Bei der Distalisation der Oberkiefermolaren mit den bisher bekannten Geräten erfolgt eine Einbringung der Kraft an der Krone mittels Bändern, was immer zu einer Kippung der Molaren führt, da die Kraft unterhalb des Schwerpunktes des Zahnes angreift. Dies führt dazu, daß zwar die Krone nach distal (hinten) bewegt wird, die Wurzel jedoch an ihrem Platz verbleibt.

Bei einer kieferorthopädischen Behandlung, die der Steigerung des Unterkieferwachstums, oder zumindest der Mesialisation der Unterkieferdentition dient, kommt es darauf an, eine gedämpfte Verbindung zwischen den Oberkiefermolaren und dem Unterkieferbogen zu schaffen. Dabei ist zu beachten, daß das Unterkieferwachstum schrittweise erfolgen muß und möglichst mit kleinen Kräften durchgeführt werden sollte. Dies erfordert eine laufende Nachjustierung, was mit den bisher bekannten Vorrichtungen aufwendig ist.

Bei einer aus der DE 103 12 855 bekannten Vorrichtung dieser Art sind diese Probleme weitestgehend gelöst; der konstruktive Aufbau trägt jedoch etwas auf und bereitet insofern bei einigen Patienten Probleme. Darüber hinaus ergibt sich konstruktiv bedingt eine Begrenzung für die maximale Öffnung des Mundes, also des Unterkiefers, was im Einzelfall ebenfalls zu Problemen führen kann.

Der Erfindung liegt die Aufgabe zugrunde, eine Vorrichtung der eingangs genannten Art so weiterzuverbessern, dass der Tragekompfort erhöht und auch ein weiteres Öffnen des Mundes ermöglicht hat.

Diese Aufgabe wird nach der Erfindung dadurch gelöst, dass das eine Gelenk als Doppelkugelgelenk ausgebildet ist, wobei beide Kugelgelenke an einer Verbindungshülse angeordnet sind.

Der durch die Erfindung erreichte Vorteil besteht zunächst im wesentlichen darin, dass durch diese konstruktive Gestaltung die Vorrichtung in der Backentasche flacher aufträgt, wodurch sich insgesamt ein größerer Tragekomfort einstellt.

In bevorzugter Ausführungform der Erfindung sind die beiden Lagerschalen der Kugelgelenke in der Verbindungshülse vorgesehen, während der eine Kugelkopf radial vorstehend an dem Teleskoprohr und der andere Kugelkopf an einem Anschlußstück angeordnet sind.

Als besonders zweckmäßige Anordnung hat sich hierbei weiter ergeben, dass die Lagerschale für den Kugelkopf des Teleskoprohrs stirnseitig axial ausgerichtet an der Verbindungshülse angeordnet ist, während die Lagerschale für den Kugelkopf des Anschlußstücks radial ausgerichtet ist.

Ferner hat es sich im Rahmen der Erfindung als günstig erwiesen, wenn am freien Ende der Gleitstange eine radial abstehende Anschlußplatte angeordnet ist, die mit einer Öse versehen ist, durch die ein Rush-Anker angebracht wird.

Um eine weitere Öffnung des Mundes zu ermöglichen, ist in dem Teleskoprohr eine Teleskophülse verschiebbar angeordnet, die die Gleitstange aufnimmt. Diese zusätzliche Teleskophülse erlaubt eine stärkere Verlängerung der gesamten Teleskopanordnung, so dass auch große Öffnungswinkel für den Unterkiefer erreichbar sind.

Weiter ist vorgesehen, dass in dem Teleskoprohr eine Stellschraube angeordnet ist, die sich gegen eine mit ihrem anderen Ende der Gleitstange anliegende Schraubenfeder abstützt. Hierdurch läßt sich die von der Schraubenfeder aufgebrachte Gegenkraft mittels der Stellschraube variieren. Um dies möglichst einfach bewerkstelligen zu können, ist die Stellschraube von der Stirnschraube des Teleskoprohrs her einstellbar.

Im folgenden wird die Erfindung an einem in der Zeichnung dargestellten Ausführungsbeispiel näher erläutert; es zeigen:
- Fig. 1: eine schematische Darstellung eines Ober- und Unterkiefers mit einer festsitzenden Spange und der daran angebrachten erfindungsgemäßen kieferorthopädischen Vorrichtung,
- Fig. 2: eine Detaildarstellung der kieferorthopädischen Vorrichtung
- Fig. 3: das Lagerelement der kieferorthopädischen Vorrichtung.

Die in der Zeichnung dargestellte kieferorthopädische Vorrichtung dient insbesondere der Vorverlagerung des Unterkiefers 1 eines Patienten mittels eines paarweise eingesetzten Verbindungsgliedes 2. Dieses Verbindungsglied 2 ist einerseits am Oberkiefer 3 und andererseits am Unterkiefer 1 jeweils mittels eines Gelenkes 4,5 angeschlossen. Im einzelnen besteht das Verbindungsglied 2 aus einem Teleskoprohr 6 sowie einer im Teleskoprohr 6 längsverschiebbar geführten Gleitstange 7.

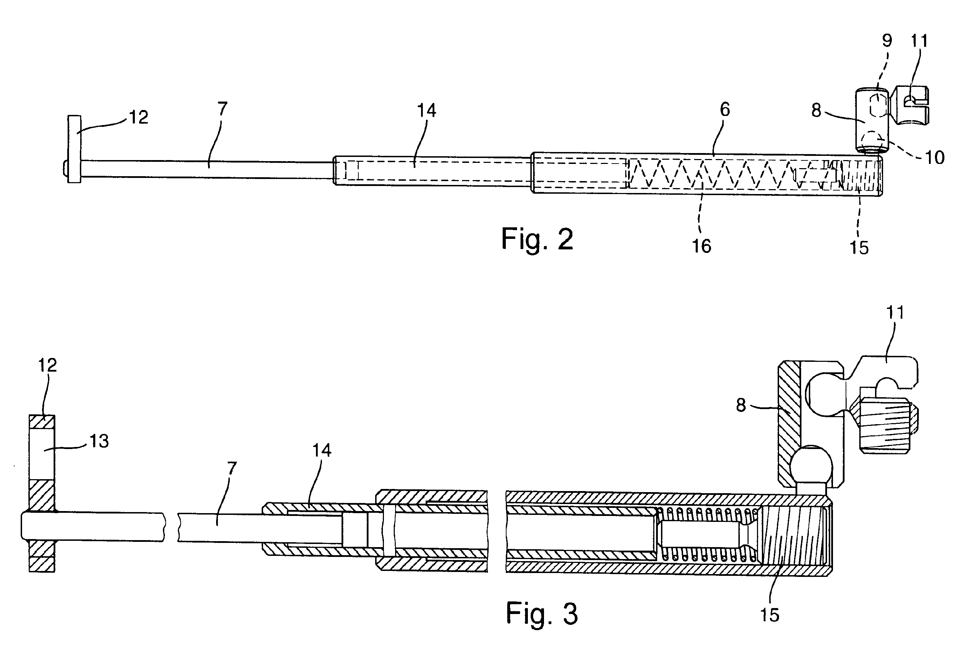

Wie sich insbesondere aus der Fig. 2 ergibt, ist das eine Gelenk 4 als Doppelkugelgelenk ausgebildet, wobei beide Kugelgelenke 9,10 in einer Verbindungshülse 8 angeordnet sind.

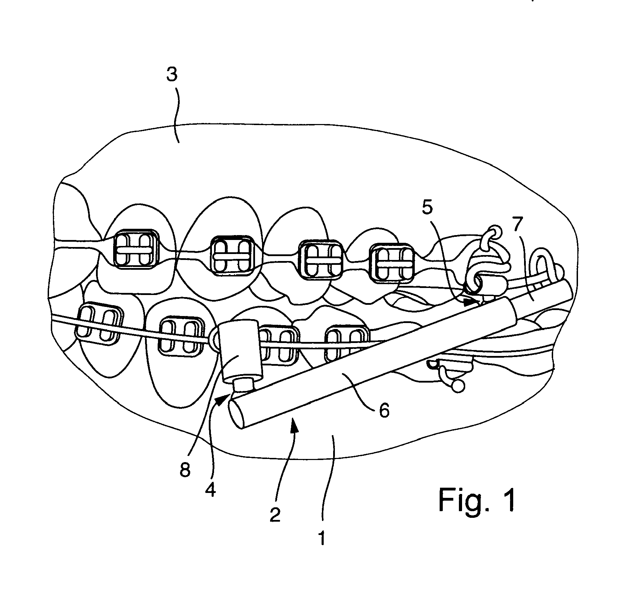

Durch diesen Aufbau läßt sich eine sehr flache Anordnung der Vorrichtung in der Backentasche erreichen, wie sich dies aus der Fig. 1 ersehen läßt.

Die beiden Lagerschalen der Kugelgelenke 9,10 sind dabei in der Verbindungshülse 8 vorgesehen, während der eine Kugelkopf radial vorstehend an dem Teleskoprohr 6 und der andre Kugelkopf an einem Anschlussstück 11 angeordnet sind. Dabei ist die Lagerschale für den Kugelkopf des Teleskoprohrs 6 stirnseitig axial ausgerichtet an der Verbindungshülse 8 angeordnet, während die Lagerschale für den Kugelkopf des Anschlussstücks 11 radial ausgerichtet ist.

Wie sich weiter aus der Zeichnung ersehen läßt, ist am freien Ende der Gleitstange 7 eine radial abstehende Anschlussplatte 12 angeordnet, die mit einer Öse 13 versehen ist. Durch diese Öse 13 ist ein sogenannter Rush-Anker angebracht.

Um eine weitere Öffnung des Mundes, also einen größeren Öffnungswinkel des Kiefers zu erreichen, ist in dem Teleskoprohr 6 zusätzlich eine Teleskophüse 14 verschiebbar angeordnet, die die Gleitstange 7 aufnimmt.

Um die von der Telefkopanordnung aufgebrachte Gegenkraft einstellen zu können, ist in dem Teleskoprohr 6 eine Stellschraube 15 angeordnet, die sich gegen eine mit ihrem anderen Ende der Gleitstange 7 anliegende Schraubenfeder 16 abstützt. Diese Stellschraube 15 ist in besonders einfacher Weise von der Stirnseite des Teleskopfrohrs 6 her einstellbar.

## Patentansprüche

1. Kieferorthopädische Vorrichtung insbesondere zum Vorverlagern des Unterkiefers (1) eines Patienten mittels eines paarweise eingesetzten Verbindungsgliedes (2), welches einerseits am Oberkiefer (3) und andererseits am Unterkiefer (1) jeweils über ein Gelenk (4,5) angeschlossen und von einem Teleskoprohr (6) sowie einer im Teleskoprohr (6) längsverschiebbar geführten Gleitstange (7) gebildet ist, **dadurch gekennzeichnet, daß** das eine Gelenk (4) als Doppelkugelgelenk ausgebildet ist, wobei beide Kugelgelenke (9,10) an einer Verbindungshülse (8) angeordnet sind.

2. Vorrichtung nach Anspruch 1, **dadurch gekennzeichnet, daß** die beiden Lagerschalen der Kugelgelenke (9,10) in der Verbindungshülse (8) vorgesehen sind, während der eine Kugelkopf radial vorstehend an dem Teleskoprohr (6) und der andere Kugelkopf an einem Anschlußstück (11) angeordnet sind.

3. Vorrichtung nach Anspruch 2, **dadurch gekennzeichnet, daß** die Lagerschale für den Kugelkopf des Teleskoprohrs (6) stirnseitig axial ausgerichtet an der Verbindungshülse (8) angeordnet ist, während die Lagerschale für den Kugelkopf des Anschlußstücks (11) radial ausgerichtet ist.

4. Vorrichtung nach einem der Ansprüche 1 bis 3, **dadurch gekennzeichnet, daß** am freien Ende der Gleitstange (7) eine radial abstehende Anschlußplatte (12) angeordnet ist, die mit einer Öse (13) versehen ist, durch die ein Rush-Anker angebracht wird.

5. Vorrichtung nach einem der Ansprüche 1 bis 4, **dadurch gekennzeichnet, daß** in dem Teleskoprohr (6) eine Teleskopshülse (14) verschiebbar angeordnet ist, die die Gleitstange (7) aufnimmt.

6. Vorrichtung nach einem der Ansprüche 1 bis 5, **dadurch gekennzeichnet, daß** in dem Telekoprohr (6) eine Stellschraube (15) angeordnet ist, die sich gegen eine mit ihrem anderen Ende der Gleitstange (7) anliegende Schraubenfeder (16) abstützt.

7. Vorrichtung nach Anspruch 6, **dadurch gekennzeichnet, daß** die Stellschraube (15) von der Stirnseite des Teleskoprohrs (6) her einstellbar ist.
